# EUROPEAN PATENT SPECIFICATION

(11) **EP 0 878 010 B1**
(45) Date of publication and mention of the grant of the patent: **31.10.2001**
(21) Application number: 96931359.2
(22) Date of filing: 02.02.1996
(51) Int. Cl.: G21C 3/322, G21C 5/06

(54) **NUCLEAR FUEL ASSEMBLY HAVING A TRANSITION PIECE WITH REDUCED FLOW RESISTANCE**
KERNBRENNSTABBÜNDEL MIT EINEM ÜBERGANGSSTÜCK,DAS EINEN NIEDRIGEN STRÄMUNGSWIDERSTAND AUFWEISST
ENSEMBLE COMBUSTIBLE NUCLEAIRE COMPORTANT UNE PIECE DE TRANSITION AVEC RESISTANCE A L'ECOULEMENT DIMINUEE

(43) Date of publication of application: 18.11.1998
(73) Proprietor: Framatome ANP GmbH, 91058 Erlangen (DE)
(72) Inventor: BARKHURST, David, J., Pasco, WA 99301 (US); DRECKER, Stefan, D-49809 Lingen (DE); MENGES, Dieter, D-91330 Eggolsheim (DE); MEIER, Werner, D-91358 Kunreuth (DE); ALTER, Dietrich, D-91058 Erlangen (DE); EMMERT, Knut, D-60322 Frankfurt (DE)
(74) Representative: Mörtel & Höfner
(86) International application number: PCT/US96/01275
(87) International publication number: WO 97/28535

(56) References cited:
- EP-A- 0 027 984
- CH-A- 470 728
- DE-A- 4 327 001
- DE-A- 4 418 500
- US-A- 3 389 056

## Description

### Background of the invention

The invention relates to a nuclear fuel assembly for a nuclear boiling water reactor and especially to a fuel assembly for this reactor having a transition piece with a reduced flow resistance.

The core of a boiling water nuclear reactor normally has a core support plate or an equivalent core structure on which the nuclear fuel elements rest. Cylindrical passages extend practically perpendicularly through said support plate and lead a moderator coolant flow through said support plate and into the fuel assemblies.

Figure 1 shows a typical fuel assembly 2 according to a prior art (German unexamined patent application 4327001), which rests on a support plate 1 of a nuclear boiling water reactor, where the moderator coolant flow (arrow 3) flows through one of the passages 4 and enters the fuel assembly. That fuel assembly contains a fuel channel 5 which has an open lower end 6, open upper end 7 and a practically rectangular channel cross section. The assembly further contains a bundle of fuel rods 8 and a transition piece 9. The fuel rods intersect that channel cross section in a practically vertical direction and are laterally surrounded by said fuel channel. The transition piece is placed in the open lower end of the fuel channel and contains an annular rim 10 at its lower end, a funnel-like enlargement 14 adjacent to said annular rim and a centering and positioning means which protrudes from that annular rim down into the cylindrical passage 4.

The annular rim 10 surrounds an inlet opening 11 at the lower end of the transition piece 9 and forms a sealing surface 12 which is conically tapered and fits into a corresponding conical counter-surface at the upper rim 13 of the passage 4. Therefore, the coolant flow is sealed against the outside of the fuel channel when it leaves the passage 4.

The funnel-like enlargement 14 acts as an adaptor between the smaller inlet opening 11 which is in line with passage 4, and the larger cross section at the open lower end 6 of the fuel channel 5. Adjacent to the conically tapered sealing surface 12, the enlargement 14 reaches to an upper part, which matches the angular cross section of the fuel channel and bears a lower tie plate 15 covering the open lower end of the channel.

The centering and positioning means 16 positions the tapered sealing surface 12 in a coaxial position with respect to the conical counter-surface at the upper rim 13 of passage 4.

It is further mentioned that in this case some of the fuel rods do not completely extend to an upper tie plate 17 like most of the fuel rods do, which have upper ends 18 guided in openings of the upper tie plate. These shorter fuel rods 18' ("part-length fuel rods") are screwed into the lower tie plate 15 (see screw connection 18''), while the other fuel rods have lower end caps which are not fixed to the lower tie plate 15, but end at or above this tie plate. These lower end caps 19 of the prior art have a cylindrical lower tip including a notch where they can be grasped by a handling tool in order to pull them through the meshes of spacer grids 20 during assembling of the fuel assembly. These spacer grids hold the fuel rods in position and are supported by a water rod 21 which acts as the "backbone" of the fuel assembly skeleton and bears the upper and lower tie plate.

Special notice is given to the centering and positioning means 16 of this prior art since this element will be altered according to the invention. This means is formed by a cylindrical element which fits into the cylindrical part of passage 4. Accordingly, the effective cross section available for the coolant flow 3 in the passage 4 is reduced to the smaller inner cross section of said cylindrical piece of tubing.

In order to position the fuel assembly 2 on the support plate 1, the fuel assembly is lowered and four fingers 26 which form a star-like crown on the lowermost end of the assembly lead the transition piece into the passage 4.

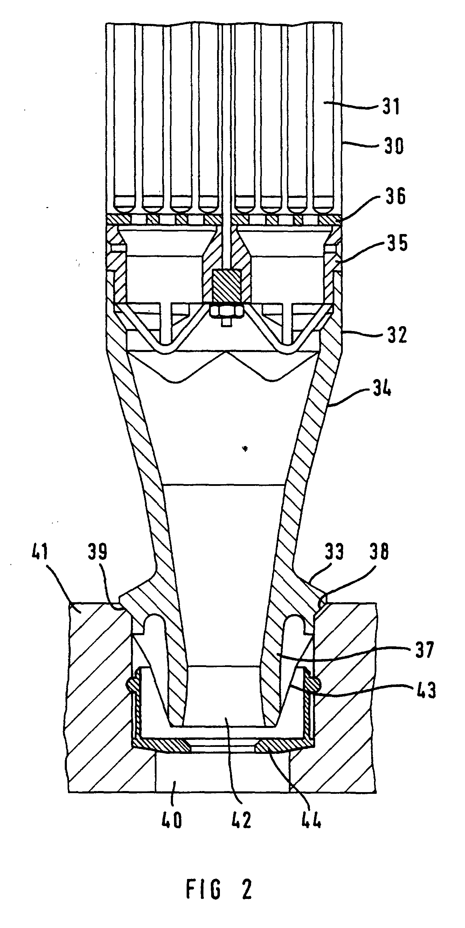

In figure 2 a similar construction according to the prior art (European Patent 0 027 984) is shown which has essentially the same elements of construction: a fuel channel 30, a bundle of fuel rods 31 and a transition piece 32 having an annular rim 33, a funnel-like enlargement 34 (including an upper part 35 with a lower tie plate 36) and centering and positioning means 37. The annular rim 33 shows a conically tapered sealing surface 38 which forms a sealing connection together with a corresponding counter-surface at the upper rim 39 of a passage 40 which extends through the core support plate 41. The centering and positioning means is again a cylindrical element which extents down into the cylindrical passage 40.

In this case, the cylindrical element 37 and the enlargement 34 have the shape of a Venturi in order to reduce the pressure drop of the coolant flow when passing the passage 40 and the inlet opening 42. There are no star-like fingers crossing the inlet opening, but the cylindrical element 37 is stiffened by lateral ribs 43 in order to protect the Venturi during inserting the fuel assembly into the passage.

The nuclear heat production within each specific fuel assembly requires a sufficient coolant flow in this assembly, i.e. the coolant flow through the support plate must be distributed over the cross area of the core in such a way that each assembly gets its specific part of the total coolant flow. This distribution is accomplished in figure 2 by a throttling plate 44 inserted in the passage opening and individually adapted to the requirements of the corresponding . fuel assembly. At the end of each operating circle of the nuclear reactor, some of the fuel assemblies are burned out and must be replaced by fresh assemblies having fresh nuclear material. According to advanced developments fresh assemblies may have an advanced structure with an altered flow resistance. This results in a "mixed core", where fresh assemblies stand next to old assemblies, fresh and old assemblies varying in their flow resistance. But minor differences in flow resistance are tolerable in order to guarantee efficient coolant flow within each assembly. On the other hand, advanced fuel assemblies may have a higher reactivity and require higher coolant flow which means the flow resistance of the fresh assemblies should be slightly less than the resistance of old assemblies in order to redistribute the flow in favour of the new assemblies.

Additionally, the coolant flow in a boiling water reactor assembly can become unstable if the flow resistance in the lower part of the assembly is not high enough with respect to the coolant flow in the upper part of the assembly. The coolant entering the lower part of the assembly is liquid water, but it leaves the upper end of the assembly as a mixture of water and steam. Due to this increase in specific volume, the flow velocity is remarkably increased in the upper parts of the fuel element. Stable flow conditions require that the resistance of the assembly is thoroughly adjusted in the different parts of the assembly.

In figure 2, selecting a suitable throttling plate allows adapting the flow resistance at the entrance of the fuel assembly to the specific requirements, as long as the minimum flow resistance (throttling plate 44 omitted) is less than the required value. Otherwise the passage opening in the core plate itself has to be enlarged. But changing the core support plate, an essential part of the reactor itself, is hardly acceptable. Therefore, the peripheral dimensions of the fuel assemblies (including the lower rim of the transition piece and its sealing surface which has to fit into the profile of the passages of the core plate) are fixed.

The interior of the fuel assembly however is open to modifications. For instance, the number of fuel rods may vary from 6×6 to 10×10, higher numbers being prefered. The same nuclear material if distributed in a higher number of fuel rods, leads to a lower specific heat production of the individual fuel rod, thereby decreasing the thermal load of each fuel rod and the highly temperature-dependent corrosion of the cladding material. On the other hand, the fuel rods are regularly distributed over the cross section of the fuel channel, and higher numbers of fuel rods result in an increase of flow resistance.

In order to guarantee the required fuel moderator ratio even in the steam region of the fuel assembly, often a water rod or a similar water channel structure (for instance a cross-like channel which divides the rectangular fuel channel into four sections) is used which guides non-boiling water into the upper region of the fuel assembly. It was also found that the use of some part-length fuel rods has the advantage that the flow resistance in the steam region decreases by increasing the flow cross section while the proper fuel moderator ratio is maintained in the upper part of the assembly. Consequently, also the flow resistance in the lower part should be reduced.

It was also found that the coolant flow inside the fuel channnel depends on the sealing quality between the lower rim of the transition piece and the sidewall or upper rim of the passage in the support plate. Sometimes the sealing surfaces of the rim and/or the passage are damaged due to an impact of the transition piece on the support plate during installation. Any deformation of these sealing surfaces is not only harmful to the sealing quality of the fitting, but also to the exact position of the fuel assembly in the reactor core where fuel assemblies stay very close together and must be held in their correct, upstanding position as exactly as possible.

### Summary of the invention

It is an object of the invention to provide a fuel assembly for a boiling water reactor of the above mentioned kind, which has an extremely low flow resistance in the region of the transition piece.

According to an object of the invention, a fuel element of the above mentioned kind is provided which fits into a passage of the support plate and has an enlarged inlet opening at the lower end of the transition piece.

It is a further object to provide a fuel assembly of the above mentioned kind which can be easily inserted and exactly positioned in a passage opening of a support plate.

Other objects are directed to a low flow resistance of a fuel assembly of the above mentioned kind, in the region of the assembly where the lower tie plate and the lower ends of the fuel rods are positioned.

It is also an object to improve the construction of the lower part of a fuel assembly of the above mentioned kind with respect to the rate of coolant flow within said assembly, especially for a mixed core where assemblies of different constructions are present.

These and other objects of the invention are more clearly understandable from the following description of a preferred embodiment.

These objects are achieved by an improved transition piece wherein said centering and positioning means at the lower rim of the transition piece consists of at least three fingers, equidistantly distributed along the circumference of said annular rim, and the inlet opening of the transition piece (i.e. the interior cross section of the annular rim) has essentially the same diameter as said cylindrical passage opening, said fingers extending radially into said circular inlet opening and axially down into the cylindrical part of the passage which is formed by the core support plate.

### Brief description of the drawings.

Figures 1 and 2 show the already explained structure of fuel assemblies and their transition pieces according to the prior art.
Figure 3 shows a side view of a preferred embodiment of the transition piece according to the invention,
Figure 4 is a view from above,
Figure 5 a longitudinal section along plane V-V of figure 4, only a part of the lower tie plate being in its final position,
Figure 6 shows a detail of figure 5, when the assembly is rest on a core support structure,
In figure 7 a section of the lower tie plate according to the preferred embodiment is shown,
Figure 8 shows a stream-lined end cap of a fuel rod.

### Detailed describtion of the preferred embodiment

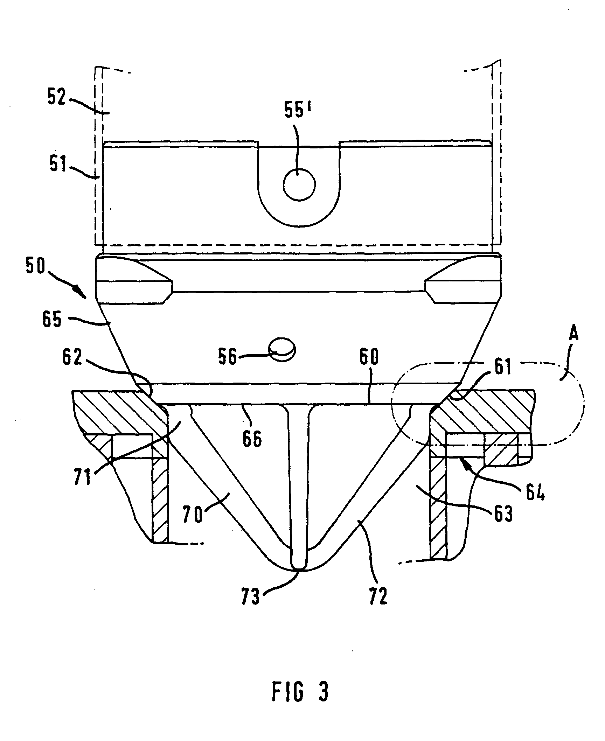

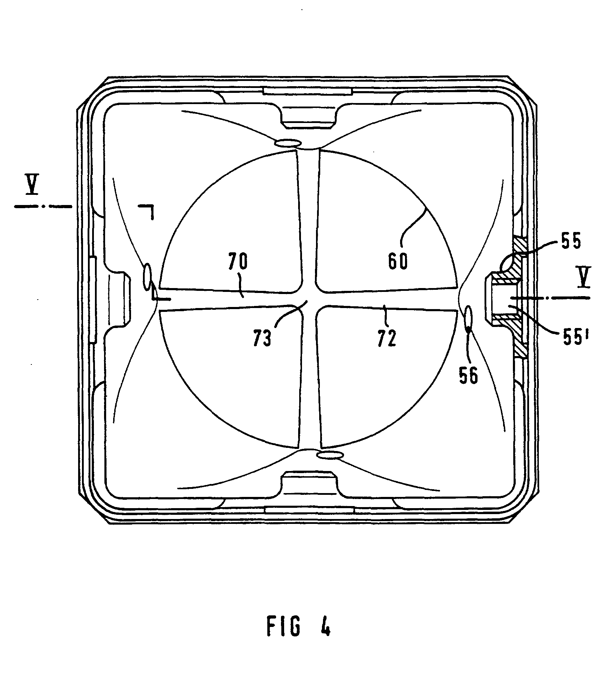

The transition piece (including the lower tie plate) is often cast in one piece having a rather complex geometrical structure. In the embodiment described in figure 3 to 8 as an example of the invention, the lower tie plate is a separate part held by a supporting skeleton (e.g. the above mentioned central water rod) for the fuel rod bundle. In other embodiments specifically designed supporting rods form the skeleton. In many cases it is convenient to cast the transition piece and the lower tie plate separately and then weld them together afterwards. In any case, some surface dimensions and outer faces of the transition piece (mainly the above mentioned sealing surface and the guide means) are essential and may be worked in by milling smoothing or polishing at the end of the manufacturing process.

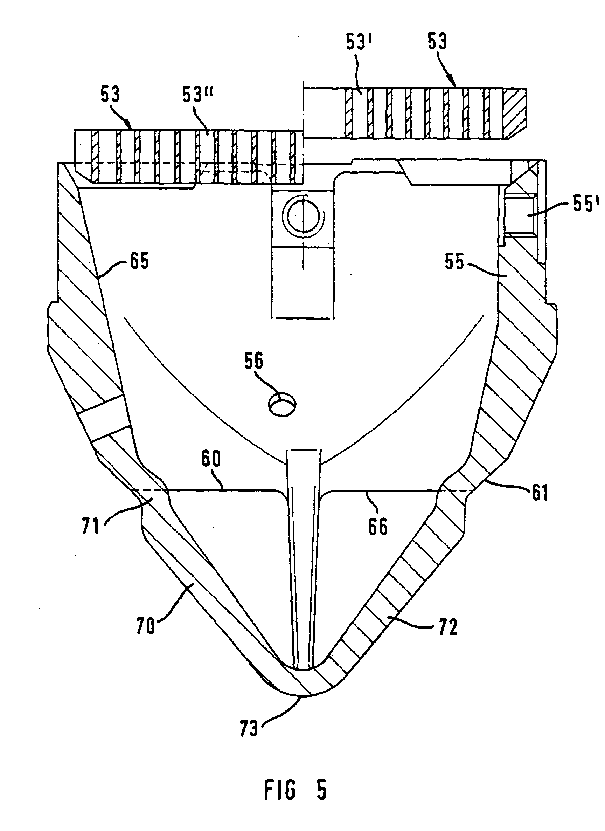

With reference to figure 3 to 5, the transition piece 50 has an upper part 51 which fits into the open lower end of the fuel channel 52. This fuel channnel 52 is shown only by dashed lines in figure 3, while the lower tie plate 53, which has internal through holes 53' and peripheral through holes 53'' and rests on an upper part of the transition piece, is shown only in figure 5.

The interior of this upper part 51 shows stiffening ribs 55 with openings 55' in which a screw may be threaded in order to fix the fuel channel to the transition piece. These screw is used to create a sealing fitting or at least a very well defined gap between the walls of the fuel channel and the transition piece in order to limit the amount of coolant which may escape from the interior of the fuel assembly. But since a well defined amount of coolant flow is even needed outside the fuel channel, the transition piece 50 has some lateral bypass openings 56.

The lower rim 60 has a conical shape on its outer surface 61 and rests on a corresponding conical rim 62 (FIG 3) which forms the outlet of a cylindrical passage 63 in the support plate 64.

According to this construction, the lower end of the fuel assembly is inserted into the passage 63, the conical rim 62 of said passage being the counter-surface corresponding to the conical surface 61 of the lower rim 60. These two surfaces fit together and form a seal which avoids that any coolant passing the passage 63 may escape in an uncontrolled way. Between the sealing surface 61 and the lower end of the fuel channel 52, the transition piece enlarges in a funnel-like manner, this enlargement 65 transforming the cross section available for the coolant flow, from the smaller circular inlet opening 66 at the lower rim 60 to the larger quadratic (or at least polygonal) open end of the fuel channel 52.

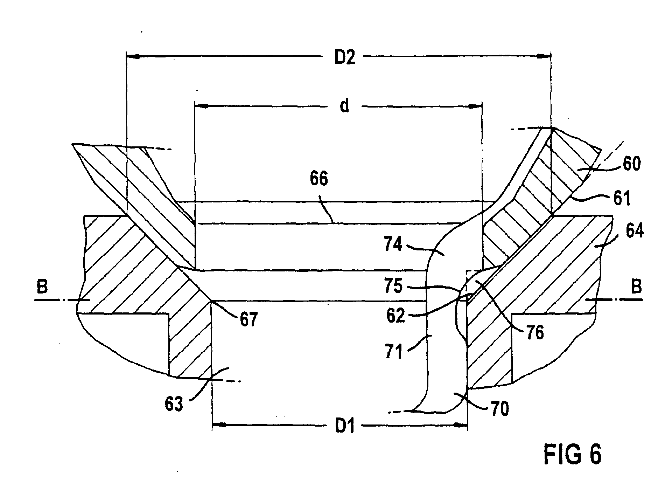

This inlet opening is surrounded by said annular lower rim 60, i.e. the diameter d of the inlet opening 66 is given by the diameter in a plane where the conical sealing surface 61 shows its most narrow part, as can be seen from FIG 6. Therefore, if this diameter d is smaller than the diameter D1, which defines the cross section of the cylindrical part of passage 63, the rim 62 of the transition piece will extend through a plane B-B where the cylindrical part of passage 63 transforms into the conical counter-surface 62 and forms an edge. If the diameter d is larger than the diameter D2 of the conical counter-surface 62 at the plane of its largest cross section, the annular rim 60 would just rest on the upper plane surface of support plate 64 and no seal would appear between surface 61 and counter-surface 62.

In order to provide a large inlet opening for the coolant flow, the diameter d is approximately equal D1 and preferably slightly larger (i.e. d lies between D1 and D2, advantageously nearer to D1 than D2), so that the annular rim 61 lies completely above the edge 67, but not on the upper plane of the support plate.

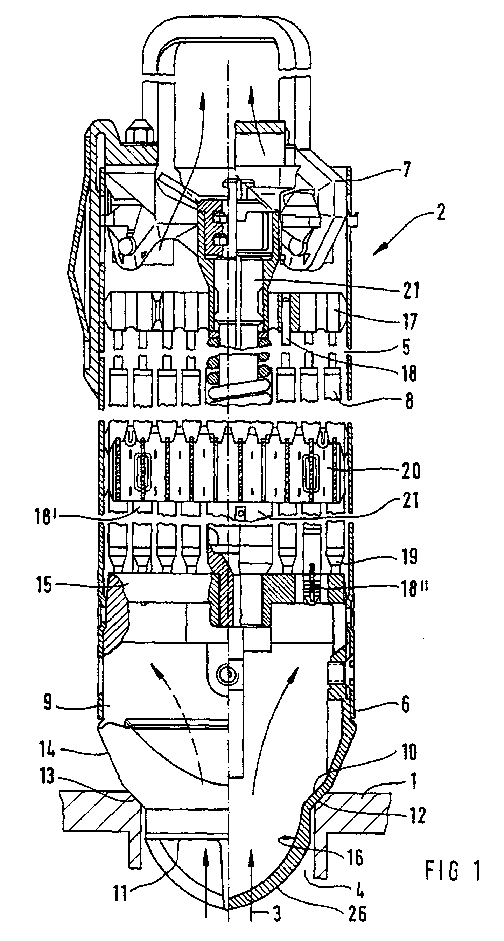

In order to ease the inserting of the annular rim 60 into the passage 63 as well as to center the transition piece of the fuel assembly in its correct position, a corresponding means protrudes downwards from rim 60 into the passage opening 63. In the prior art (figure 1 and 2) this centering and positioning means is a small cylindrical element, the periphery of which is fitting as close as possible into the cylindrical part of passage 63. This prior construction is connected with an unfavourable small cross section of the inlet opening. Therefore, according to the invention, only several fingers 70 (at least three, preferably four) act as such a centering and positioning means.

These fingers are equidistantly distributed along the circumference of said annular rim 60. They are attached to the inner surface of the rim pointing towards the axis of the fuel element, and form straight parts 71, adjacent to the annular rim 60 and practically parallel to the cylindrical sidewalls of the passage 63. Therefore, these straight finger parts position the transition piece in a position where the inlet opening 66 and the passage 63 are practically concentric. The peripheral surface of these finger parts (i.e. the surface pointing towards the sidewalls of the passage 63) form segments of the surface of a cylinder, the radius of this cylinder being nearly the same as the radius of the circle D1 of the passage opening (for instance at most lmm less if possible according to the tolerance limits of D1).

Figure 3 further shows that said fingers 70 have finger ends 72 which point to each other in a star-like manner. They may be fixed together at a knot point 73 which forms the lowermost tip part of the transition piece. In other embodiments, this knot point could be replaced by a ring which connects the finger ends 72 together.

Detail A of figure 3, i.e. a preferable shape of the material which connects the straight finger parts 71 to the annular rim 60, is shown in figure 6 in detail. As it can be seen, the conical surface 61 and the counter-surface 62 are in close contact with each other and form the above mentioned seal, and the straight finger parts 71 virtually contact the sidewalls of the cylindrical part of the passage opening 63. But the material 74 connecting the straight finger parts 71 to the annular rim leaves a gap 76 between the edge 67 and the end of the transition piece. Therefore, the edge 67 can not damage the sealing surface 61 nor the straight finger parts 71.

The gap 76 is created by a concave curvature 75 of said connecting material 76 or at least by a recessed edge (dashed line in figure 6), with respect to the slope of surface 61.

This construction reduces the danger of damaging (scratching or deforming) the sealing surface 61 and its counter-surface 62.

The pressure drop across transition piece 50 is considerably less than in the case of figure 1 although the alterations seem to be very small. With respect to the straight finger parts 71 of figure 3 and compared to the element which is shown in figure 1 extending down into passage 4, it should be noted that nearly all the material of said element is removed until only said straight finger are left, i.e. about 90 % of the cross section area of said cylindrical element is gained in order to increase the inlet opening of the transition piece. This leads to a decreased pressure drop, which is even further decreased by a better hydrodynamic flow pattern, which is essentially the pattern of a Venturi nozzle.

The corresponding reduction in pressure drop may be used for balancing an additional pressure drop which is created if additional elements of construction are desired within the fuel assembly. Since broken parts and other debris which are carried by the coolant flow may damage the fuel rods, a debris filter should be placed in the coolant flow path before the coolant reaches the fuel rods. If cooler and warmer parts of the coolant flow are mixed, a more efficient cooling takes place and it is advantageous to attach mixing vanes to the spacer grids or use additional mixing grids. These and other improvements create the need of an additional compensation by modifications which decrease the pressure drop in other parts of the fuel assembly.

If in a nuclear reactor using its specific coolant flow rate and velocity, the throttling plate 44 in the core support plate 41 of figure 2 is removed in order to decrease the pressure drop, the design of transition piece 32 (FIG 2) creates - due to its Venturi-pattern - a relatively low pressure drop which can hardly be surpassed by using the transition piece design of figure 1. According to the principle of this invention, it is the passage opening 63 (FIG 3) of the core support plate itself which acts as the inlet opening of the Venturi nozzle, and the pressure drop is not only considerably less than in the case of figure 1 but also figure 2.

The next important obstacle for the coolant flow which has passed the core support plate has reached passage 63, is the lower tie plate 53, which has flow through holes for guiding the coolant into the spaces between adjacent fuel rods. As a first step to reduce said flow resistance, the through holes could be enlarged. In the prior art there are often fuel rods which are screwed to the lower tie plate in the same way as it is shown together with the part-length fuel rods of figure 1. Even fuel rods not screwed into the tie plate have end caps with guiding tips which extend into openings of the lower tie plate in order to fix the lower ends of the fuel rods horizontally. In this prior art the flow through holes in the lower tie plate can not be substantially enlarged. In the preferred embodiment however, the end cap of the fuel rods (except partial-length fuel rods) are not screwed into said lower tie plate.

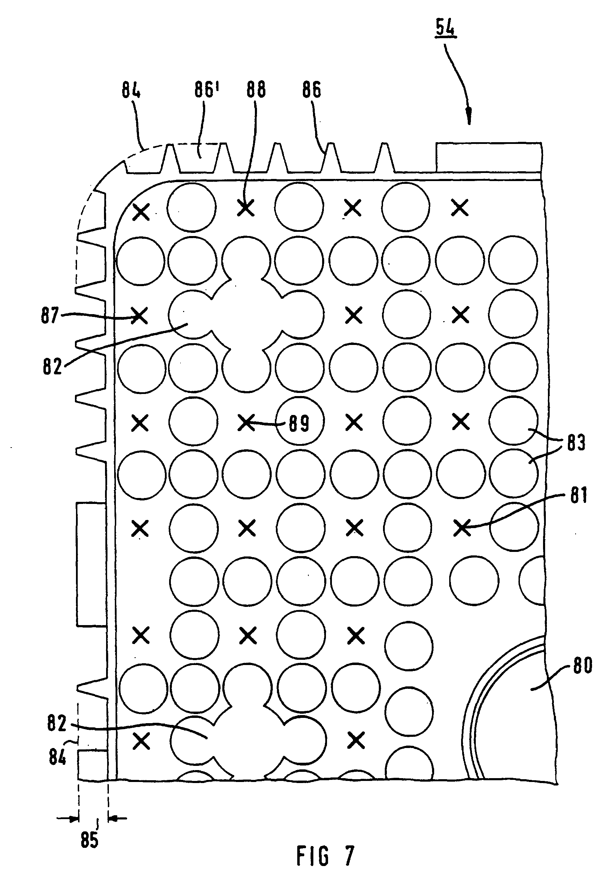

Figure 7 shows a section of the lower tie plate for a fuel assembly having fuel rods arranged in 11 rows and 11 columnes (only five rows and six columnes of rod positions are shown). In the center of the tie plate a large flow hole 80 replaces 3x3 fuel rods and acts as means to screw the above mentioned central water channel (position 21 in figure 1) to the lower tie plate. The positions where fuel rods of full length stand on the lower tie plate are marked by crosses 81 and recesses where part length - fuel rods are screwd into the tie plate are shown at 82. The fuel rod positions are surrounded by at least eight through holes 83.

The dashed line 84 in figure 7 shows the inner surface of the water channel or the upper rim of the transition piece, whatever determines the maximum width of the tie plate.

The tie plate 54 has a smaller cross section than the fuel channel itself and is spaced apart from the walls of the fuel channel and the periphery of the transition piece (line 84). Therefore, a gap occurs. This gap is maintained by ribs 86 which laterally protrude from the tie plate towards the channel walls and constitute peripheral through holes 86'. The ribs are relatively small: their basis line on the lower tie plate may be less than (e.g. about the half of) the distance between adjacent ribs. Therefore, the cross area of the ribs is much smaller than the cross section of the through holes 86'. Therefore, a considerable part of the coolant is directed to the area next to the channel walls. This is advantagous since a sufficient coolant flow is often difficult to maintain between the peripheral fuel rods and the channel wall of a fuel assembly.

Specific attention is drawn to the fuel rod positions 87, 88, 89. It is obvious that the through holes surrounding these positions must be much-smaller and/or reduced in number if the full length-fuel rods at position 87 and 88 were screwed into corresponding recesses in the same way as the part length-fuel rod at position 89. Additionally, there were no space for a peripheral hole. Therefore, the through holes in figure 7 are relatively large.

On the other hand, by using eight through holes next to the inner fuel rods, their individual cross section is still relatively small and retains most of the above mentioned debris which could damage the fuel rods.

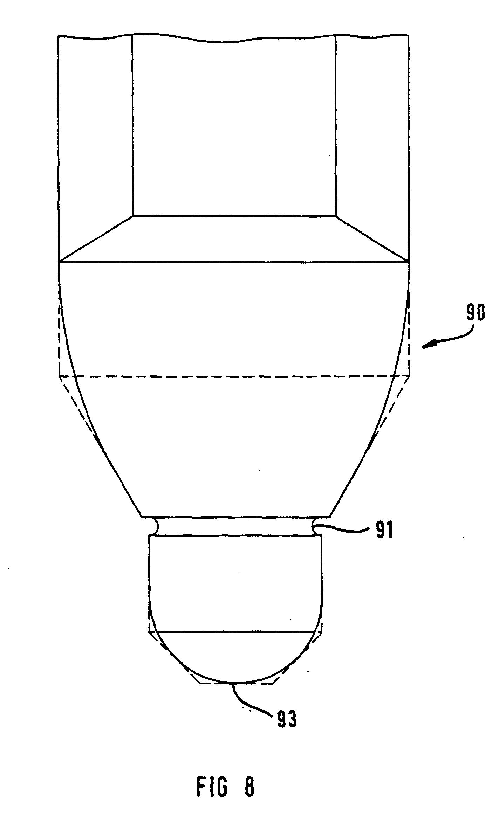

The end caps 90 (FIG 8) of the fuel rods themselves form a peripheral notch 91 or a similar profile which is used to grasp the fuel rods by a handling tool and pull them through the meshes of the spacer grids during manufacturing of the assemblies. In the prior art, as shown by dashed lines in figure 8, the cross section of the end caps is reduced step by step and finally forms a truncated cone with a blank front 93. Therefore, well known end caps form several edges. According to the invention, a remarkable advantage is gained by a streamlined or at least half spherical-shaped tip below that profile. Also, all edges above that profile are rounded. Therefore, the end caps of the fuel rods create a less turbulent coolant flow, resulting in a reduced flow resistance and pressure drop for the coolant when it has passed the lower tie plate.

Thus, the preferred embodiment contains several improvements (centering fingers instead of an annular centering means, enlarged through holes in the lower tie plate, peripheral through holes between the tie plate and the channel wall, streamlined fuel rod-end caps).

## Claims

1. A nuclear fuel assembly for the core of a boiling water nuclear fuel reactor, said core having a support plate (1), nuclear fuel assemblies (2) resting on said support plate (1) and cylindrical passages (4, 63) leading coolant flow into said fuel assemblies, each passage (4, 63) having a cylindrical part and an conically enlarged upper rim (13) and extending practically perpendicularly through said support plate,
said nuclear fuel assembly containing
a) a fuel channel (52) having an open upper and lower end and a virtually rectangular channel cross section,
b) a bundle of virtually vertical fuel rods (87, 88, 89) intersecting said channel cross section and being laterally surrounded by said fuel channel (52), and
c) a transition piece (50) being inserted into said open lower end of said fuel channel (52) and containing
i) an annular rim (60) surrounding an essentially circular inlet opening (66) at a lower end of said transition piece (50), said annular rim (60) forming a conically tapered sealing surface (61) and fitting into a corresponding conical counter-surface (62) at said upper rim of one of said passages (63),
ii) a funnel-like enlargement (65), adjacent to said conically tapered sealing surface (61), an upper part (51) of said enlargement (65) matching said rectangular channel cross section and bearing a lower tie plate (53) covering said open lower end of said fuel channel,
iii) a centering and positioning means (70) for positioning said conically tapered sealing surface (61) in a co-axial position with respect to said conical counter-surface (62), said centering and positioning means (70) protruding from said annular rim down into said cylindrical passage, the improvement comprising:
- said positioning and centering means (70) consisting of at least three fingers (70) being equidistantly distributed along the circumference of said annular rim (60), and
- said circular inlet opening (66) having essentialy the same diameter as said cylindrical passage (63), said fingers extending radially into said circular inlet opening (66).

2. A nuclear fuel assembly according to claim 1, wherein said fingers (70) have straight finger parts (71) being adjacent to said annular rim (60) and parallel to sidewalls of said passage (63).

3. A nuclear fuel assembly according to claim 2, wherein said straight finger parts (71) have a peripheral surface forming segments of a surface of a cylinder, the radius of said cylinder being at most one millimeter less than the radius of said passage (63).

4. A nuclear fuel assembly according to claim 1, wherein said conically tapered sealing surface (61) has, at its smallest circular cross section, a diameter larger or practically equal to the diameter of the cylindrical passage (63).

5. A nuclear fuel assembly according to claim 1, wherein said counter-surface (62) and a cylindrical part of said passage (63) form an edge (67) surrounding an axis of said passage (63), and said lower rim (60) of the transition piece is positioned above said edge (67).

6. A nuclear fuel assembly according to claim 1, wherein said fingers (70) have finger ends (72) pointing to each other in a star-like manner and being fixed together by a lowermost tip part (73) of the transition piece.

7. A nuclear fuel assembly according to claim 1, wherein said fingers (70) are connected to said annular rim by material (74) forming a concave curvature (75) or a recessed edge with respect to the slope of said conically tapered sealing surface (61).

8. A nuclear fuel assembly according to claim 1, wherein said lower tie plate (53) has a smaller cross section than said fuel channel (52) and is spaced apart from the walls of said fuel channel (52) by a plurality of ribs (86) on each of the four sides of the fuel channel, said ribs forming a plurality of flow through holes (86') between the fuel channel (52) and the lower tie plate (53).

9. A nuclear fuel assembly according to claim 8, wherein said ribs (86) have a base which is equal or smaller than about the half of a distance between adjacent ribs (86).

10. A nuclear fuel assembly according to claim 1, wherein each of at least the majority of said fuel rods (87, 88, 89) has an end cap (90) at its lower end which is positioned above said lower tie plate (53).

11. A nuclear fuel assembly according to claim 10, wherein said end cap (90) has a profile (91) for being grasped by a handling tool, a streamlined or approximately half-spherically rounded tip below said profile and an rounded edge above said profile.

## Patentansprüche

1. Kernbrennelement für den Kern eines Siedewasserreaktors, wobei der Kern eine Stützplatte (1), auf der Stützplatte (1) aufliegende Kernbrennelemente (2) und Kühlmittelstrom in die Brennelemente leitende zylindrische Durchgänge (4, 63) aufweist, wobei jeder Durchgang (4, 63) einen zylindrischen Teil und einen konisch vergrößerten oberen Rand (13) aufweist und sich praktisch senkrecht durch die Stützplatte erstreckt,
wobei das Kernbrennelement folgendes enthält:
a) einen Brennstoffkanal (52) mit einem offenen oberen und unteren Ende und einem praktisch rechteckigen Kanalquerschnitt,
b) ein Bündel praktisch vertikaler Brennstäbe (87, 88, 89), die den Kanalquerschnitt schneiden und seitlich von dem Brennstoffkanal (52) umgeben sind, und
c) ein Übergangsstück (50), das in das offene untere Ende des Brennstoffkanals (52) eingeführt ist und folgendes enthält:
i) einen ringförmigen Rand (60), der eine im wesentlichen kreisförmige Einlaßöffnung (66) an einem unteren Ende des Übergangsstücks (50) umgibt, wobei der ringförmige Rand (60) eine sich konisch verjüngende Dichtungsfläche (61) bildet und in eine entsprechende konische Gegenfläche (62) am oberen Rand eines der Durchgänge (63) paßt,
ii) eine trichterförmige Aufweitung (65) neben der sich konisch verjüngenden Dichtungsfläche (61), wobei ein oberer Teil (51) der Aufweitung (65) auf den rechteckigen Kanalquerschnitt abgestimmt ist und eine untere Stabhalteplatte (53) trägt, die das offene untere Ende des Brennstoffkanals bedeckt,
iii) ein Zentrier- und Positioniermittel (70) zur Positionierung der sich konisch verjüngenden Dichtungsfläche (61) in einer koaxialen Position bezüglich der konischen Gegenfläche (62), wobei das Zentrier- und Positioniermittel (70) von dem ringförmigen Rand nach unten in den zylindrischen Durchgang ragt,
**dadurch gekennzeichnet, daß**
- das Positionier- und Zentriermittel (70) durch mindestens drei Finger (70) gebildet wird, die abstandsgleich entlang dem Umfang des ringförmigen Rands (60) verteilt sind, und
- die kreisförmige Einlaßöffnung (66) im wesentlichen den gleichen Durchmesser wie der zylindrische Durchgang (63) aufweist, wobei sich die Finger radial in die kreisförmige Einlaßöffnung (66) erstrecken.

2. Kernbrennelement nach Anspruch 1, bei dem die Finger (70) gerade Fingerteile (71) aufweisen, die sich neben dem ringförmigen Rand (60) befinden und parallel zu den Seitenwänden des Durchgangs (63) verlaufen.

3. Kernbrennelement nach Anspruch 2, bei dem die geraden Fingerteile (71) eine Umfangsfläche aufweisen, die Segmente einer Zylinderfläche bildet, wobei der Radius des Zylinders höchstens einen Millimeter kleiner ist als der Radius des Durchgangs (63).

4. Kernbrennelement nach Anspruch 1, bei dem die sich konisch verjüngende Dichtungsfläche (61) an ihrem kleinsten Kreisquerschnitt einen Durchmesser aufweist, der größer als der Durchmesser des zylindrischen Durchgangs (63) oder praktisch gleich diesem Durchmesser ist.

5. Kernbrennelement nach Anspruch 1, bei dem die Gegenfläche (62) und ein zylindrischer Teil des Durchgangs (63) eine eine Achse des Durchgangs (63) umgebende Kante (67) bilden und der untere Rand (60) des Übergangsstücks über der Kante (67) positioniert ist.

6. Kernbrennelement nach Anspruch 1, bei dem die Finger (70) Fingerenden (72) aufweisen, die sternförmig zueinander weisen und durch einen untersten Spitzenteil (73) des Übergangsstücks aneinander befestigt sind.

7. Kernbrennelement nach Anspruch 1, bei dem die Finger (70) durch ein Material (74) mit dem ringförmigen Rand verbunden sind, das eine konkave Krümmung (75) oder eine ausgesparte Kante bezüglich der Neigung der sich konisch verjüngenden Dichtungsfläche (61) bildet.

8. Kernbrennelement nach Anspruch 1, bei dem die untere Stabhalteplatte (53) einen kleineren Querschnitt aufweist als der Brennstoffkanal (52) und durch mehrere Rippen (86) auf jeder der vier Seiten des Brennstoffkanals von den Wänden des Brennstoffkanals (52) beabstandet ist, wobei die Rippen mehrere Strömungsdurchgangslöcher (86') zwischen dem Brennstoffkanal (52) und der unteren Stabhalteplatte (53) bilden.

9. Kernbrennelement nach Anspruch 8, bei dem die Rippen (86) eine Basis aufweisen, die gleich oder kleiner als ungefähr die Hälfte eines Abstands zwischen benachbarten Rippen (86) ist.

10. Kernbrennelement nach Anspruch 1, bei dem zumindest die meisten der Brennstäbe (87, 88, 89) an jeweils ihrem unteren Ende eine Endkappe (90) aufweisen, die über der unteren Stabhalteplatte (53) positioniert ist.

11. Kernbrennelement nach Anspruch 10, bei dem die Endkappe (90) ein Profil (91) zum Ergreifen mit einem Handhabungswerkzeug, eine stromlinienförmige oder ungefähr halbkugelförmig abgerundete Spitze unter dem Profil und eine abgerundete Kante über dem Profil aufweist.

## Revendications

1. Assemblage combustible nucléaire pour le coeur d'un réacteur de combustible nucléaire à eau bouillante, le coeur comportant une plaque (1) de support, des assemblages (2) combustibles nucléaires reposant sur la plaque (1) de support et des passages (4, 63) cylindriques conduisant un écoulement de fluide de refroidissement dans les assemblages combustibles, chaque passage (4, 63) ayant une partie cylindrique et un rebord (13) supérieur agrandi de manière conique et s'étendant sensiblement perpendiculairement à travers la plaque de support,
l'assemblage combustible nucléaire comportant
a) un canal (52) à combustible ayant une extrémité supérieure ouverte et une extrémité inférieure ouverte et une section transversale de canal virtuellement rectangulaire,
b) un faisceau de crayons combustibles (87, 88, 89) sensiblement verticaux intersectant la section transversale de canal et entourés latéralement par le canal (52) à combustible, et
c) une pièce (50) de transition qui est insérée dans l'extrémité inférieure ouverte du canal (52) à combustible et comportant
i) un rebord (60) annulaire entourant une ouverture (66) d'entrée sensiblement circulaire à une extrémité inférieure de la pièce (50) de transition, le rebord (60) annulaire formant une surface (61) d'étanchéité biseautée de manière conique et s'adaptant dans une contre-surface (62) conique correspondante au rebord supérieur de l'un des passages (63),
ii) un élargissement (65) en forme d'entonnoir, adjacent à la surface (61) d'étanchéité biseautée de manière conique, une partie (51) supérieure de l'élargissement (65) correspondant à la section transversale de canal rectangulaire et portant un embout (53) inférieur recouvrant l'extrémité inférieure ouverte du canal à combustible,
iii) des moyens (70) de centrage et de positionnement pour positionner la surface (61) d'étanchéité biseautée conique en une position coaxiale par rapport à la contre-surface (62) conique, les moyens (70) de positionnement et de centrage faisant saillie à partir du rebord annulaire vers le bas dans le passage cylindrique, le perfectionnement étant tel que :
- les moyens (70) de positionnement et de centrage sont constitués d'au moins trois doigts (70) qui sont répartis de manière équidistante le long de la circonférence du rebord (60) annulaire, et
- l'ouverture (66) d'entrée circulaire est sensiblement de même diamètre que celui du passage (63) cylindrique, les doigts s'étendant radialement dans l'ouverture (66) d'entrée circulaire.

2. Assemblage combustible nucléaire suivant la revendication 1, dans lequel les doigts (70) ont des parties (71) de doigt droites qui sont adjacentes au rebord (60) annulaire et qui sont parallèles aux parois latérales du passage (63).

3. Assemblage combustible nucléaire suivant la revendication 2, dans lequel les parties (71) de doigt droites ont une surface périphérique formant des segments d'une surface d'un cylindre, le rayon du cylindre étant inférieur au rayon du passage (63) d'au plus 1 mm.

4. Assemblage combustible nucléaire suivant la revendication 1, dans lequel la surface (61) d'étanchéité biseautée de manière conique a, à sa section transversale circulaire la plus petite, un diamètre plus grand ou pratiquement égal au diamètre du passage (63) cylindrique.

5. Assemblage combustible nucléaire suivant la revendication 1, dans lequel la contre-surface (62) et une partie cylindrique du passage (63) forment un bord (67) entourant un axe du passage (63), et le rebord (60) inférieur de la pièce de transition est positionné au-dessus du bord (67).

6. Assemblage combustible nucléaire suivant la revendication 1, dans lequel les doigts (70) ont des extrémités (72) de doigt qui pointent les unes vers les autres à la manière d'une étoile et qui sont fixées ensemble par une partie (73) de pointe la plus inférieure de la pièce de transition.

7. Assemblage combustible nucléaire suivant la revendication 1, dans lequel les doigts (70) sont reliés au rebord annulaire par du matériau (74) formant une courbure (75) concave ou un bord évidé par rapport à la pente de la surface (61) d'étanchéité biseautée coniquement.

8. Assemblage combustible nucléaire suivant la revendication 1, dans lequel l'embout (53) inférieur a une section transversale plus petite que celle du canal (52) à combustible et est à distance des parois du canal (52) à combustible en ayant entre elles une pluralité de nervures (86) sur chacun des quatre côtés du canal à combustible, les nervures formant une pluralité de trous (86') de traversée d'écoulement entre le canal (52) à combustible et l'embout (53) inférieur.

9. Assemblage combustible nucléaire suivant la revendication 8, dans lequel les nervures (86) ont une base qui est égale ou plus petite à environ la moitié d'une distance entre des nervures (86) adjacentes.

10. Assemblage combustible nucléaire suivant la revendication 1, dans lequel chacun d'au moins la majorité des crayons (87, 88, 89) combustibles a un bouchon (90) d'extrémité à son extrémité inférieure qui est positionné au-dessus de l'embout (53) inférieur.

11. Assemblage combustible nucléaire suivant la revendication 10, dans lequel le bouchon (90) d'extrémité a un profilé (91) destiné à être saisi par un outil de saisie ou manipulation, une pointe carénée ou sensiblement arrondie de manière semi-sphérique en dessous du profilé et un bord arrondi au-dessus du profilé.
